Europäisches Patentamt

European Patent Office

Office européen des brevets

(19)

(11)  EP 0 934 346 B1

(12)  FASCICULE DE BREVET EUROPEEN

(45) Date de publication et mention
de la délivrance du brevet:
**12.07.2000  Bulletin 2000/28**

(21) Numéro de dépôt: **97946763.6**

(22) Date de dépôt: **16.10.1997**

(51) Int Cl.⁷: **C08F 210/16**, C08F 4/24

(86) Numéro de dépôt international:
**PCT/EP97/05912**

(87) Numéro de publication internationale:
**WO 98/18834 (07.05.1998 Gazette 1998/18)**

(54) **COPOLYMERE D'ETHYLENE ET D'AU MOINS UNE ALPHA-OLEFINE ET PROCEDE POUR SON OBTENTION**

ETHYLENE COPOLYMERE MIT MINDESTENS EINEM A-OLEFIN UND VERFAHREN ZU IHRER HERSTELLUNG

COPOLYMER OF ETHYLENE AND OF AT LEAST ONE ALPHA-OLEFIN AND METHOD FOR OBTAINING SAME

(84) Etats contractants désignés:
**AT BE DE DK ES FI FR GB IT NL PT SE**

(30) Priorité:  **25.10.1996  BE 9600910**

(43) Date de publication de la demande:
**11.08.1999  Bulletin 1999/32**

(73) Titulaire: **SOLVAY POLYOLEFINS EUROPE - BELGIUM (Société Anonyme)
1050 Bruxelles (BE)**

(72) Inventeur: **KOCH, Benoît
B-4280 Hannut (BE)**

(74) Mandataire: **Destryker, Elise Martine et al
Solvay Polyolefins Europe-Belgium
(Société Anonyme)
Département de la Propriété Industrielle
310, rue de Ransbeek
1120 Bruxelles (BE)**

(56) Documents cités:
**EP-A- 0 712 868          DE-A- 4 228 883
US-A- 4 801 572**

**Description**

La présente invention concerne des copolymères de l'éthylène et d'au moins une alpha-oléfine présentant une combinaison avantageuse de caractéristiques qui les rend particulièrement adaptés à la mise en oeuvre par extrusion et extrusion-soufflage et plus particulièrement à la fabrication d'objets présentant une bonne résistance à la fissuration sous contrainte. Elle concerne également un procédé pour l'obtention de ces copolymères.

Il est connu que la résistance à la fissuration d'un polyéthylène augmente en y incorporant une alpha-oléfine. Toutefois, la quantité maximale d'alpha-oléfine qui peut être incorporée dans le polyéthylène est limitée parce que son incorporation provoque une diminution de la masse volumique standard du polyéthylène et, dès lors, des propriétés mécaniques telles que la rigidité. Par ailleurs, lorsqu'en présence d'un catalyseur au chrome, une faible quantité d'alpha-oléfine est incorporée dans le polyéthylène, l'incorporation ne se fait pas toujours de manière homogène, en particulier sur les chaînes de masse moléculaire élevée.

Le brevet US 5,236,998 propose de remédier à ce problème en préparant un copolymère d'éthylène comprenant trois fractions de polyéthylène dont seule la fraction de haut poids moléculaire comprend l'alpha-oléfine, au moyen d'un catalyseur Ziegler-Natta dans deux réacteurs disposés en parallèle, dont le premier ne contient que de l'éthylène, à haute température, et dont le second contient un mélange éthylène - alpha-oléfine, à plus faible température, puis la polymérisation est poursuivie dans un troisième réacteur dans lequel les polymères sortis des deux réacteurs sont rassemblés. Un tel procédé est difficile à réaliser industriellement et produit un mélange hétérogène de résines comprenant du chlore résiduaire provenant du catalyseur.

Il est par ailleurs connu que des copolymères comprenant moins de résidus catalytiques et plus particulièrement comprenant très peu de chlore peuvent être obtenu au moyen de catalyseurs à base d'oxyde de chrome déposé sur un support (appelé généralement des catalyseurs au chrome). Il est également connu que des polymères d'éthylène obtenus avec ce type de catalyseurs possèdent une meilleure tenue en fondu que des polymères obtenus au moyen de catalyseurs Ziegler-Natta. Toutefois, l'utilisation des catalyseurs au chrome classiques dans un procédé de copolymérisation de l'éthylène et d'au moins une alpha-oléfine en une seule étape ne permet pas d'incorporer l'alpha-oléfine de manière homogène dans le copolymère et plus particulièrement dans les chaînes de plus haut poids moléculaire. En outre, les copolymères produits au moyen de catalyseurs au chrome classiques ne possèdent pas, pour un indice de fluidité donné, à la fois une masse volumique standard et une teneur en alpha-oléfine élevées. Par ailleurs, les copolymères produits au moyen de catalyseurs au chrome classiques dans des procédés de polymérisation en une seule étape ont une distribution des masses moléculaires relativement étroite et un rapport des viscosités dynamiques $\mu_0 / \mu_2$ qui ne sont modulables que dans des limites étroites.

La présente invention vise à remédier aux inconvénients précités en fournissant des copolymères d'éthylène obtenus au moyen d'un solide catalytique à base d'oxyde de chrome, qui présentent, pour un indice de fluidité donné, un meilleur compromis entre la masse volumique standard et la teneur en alpha-oléfine et qui présentent également une distribution des masses moléculaires relativement large.

L'invention concerne dès lors un copolymère de l'éthylène et d'au moins une alpha-oléfine obtenu au moyen d'un solide catalytique à base d'oxyde de chrome, ledit copolymère possédant un indice de fluidité HLMI exprimé en g/10 min, une quantité d'alpha-oléfine Q exprimée en g d'alpha-oléfine par kg de copolymère, une masse volumique standard MVS exprimée en kg/m$^3$ et des viscosités dynamiques $\mu_0$ et $\mu_2$ mesurées à 190 °C, respectivement à des gradients de vitesse de 1 et 100 s$^{-1}$, répondant aux relations

$$MVS \geq (952,75 + 5,40 \times \log HLMI - 0,79 \times Q),$$

et

$$\mu_0 / \mu_2 \geq (23,67 - 6,67 \times \log HLMI).$$

Aux fins de la présente invention, on entend désigner par copolymères de l'éthylène et d'au moins une alpha-oléfine, les copolymères comprenant des unités monomériques dérivées de l'éthylène et des unités monomériques dérivées d'une ou plusieurs alpha-oléfines et comprenant au moins 90 %, en particulier au moins 95 %, en poids d'unités monomériques dérivés de l'éthylène. Les copolymères selon l'invention comprennent de préférence au moins 97 % en poids d'unités monomériques dérivés de l'éthylène. Particulièrement préférés sont les copolymères constitués essentiellement d'unités monomériques dérivées de l'éthylène et d'unités monomériques dérivées d'une ou plusieurs alpha-oléfines.

Les alpha-oléfines sont généralement choisies parmi celles contenant de 3 à 12 atomes de carbone, plus particulièrement parmi celles contenant de 3 à 8 atomes de carbone. De bons résultats ont été obtenus avec le 1-butène et/ou le 1-hexène. Tout particulièrement préférés sont les copolymères de l'éthylène et du 1-hexène.

Aux fins de la présente invention, la teneur en alpha-oléfine Q est exprimée en g d'alpha-oléfine par kg de copolymère. Elle est mesurée par RMN $^{13}$C selon la méthode décrite dans J.C.RANDALL, JMS-REV.MACROMOL. CHEM.PHYS., C29(2&3), p. 201-317 (1989), c'est-à-dire que la teneur en unités dérivées de l'alpha-oléfine est calculée à partir des mesures des intégrales des raies caractéristiques de l'alpha-oléfine par rapport à l'intégrale de la raie caractéristique des unités dérivées de l'éthylène (30 ppm).

La teneur en alpha-oléfine dans le copolymère selon l'invention est généralement d'au moins 1 g par kg de polymère, en particulier d'au moins 4 g/kg, les valeurs d'au moins 6 g/kg étant favorables. La teneur en alpha-oléfine est habituellement d'au plus 100 g/kg, de préférence d'au plus 50 g/kg de polymère. Particulièrement préférée est une teneur en alpha-oléfine qui ne dépasse pas 30 g/kg.

Une des caractéristiques essentielles du copolymère selon l'invention réside donc en ce qu'il présente, pour un indice de fluidité HLMI donné et une teneur en alpha-oléfine Q donnée, une MVS plus élevée que les copolymères de l'éthylène connus. Dans le cadre de la présente invention, la masse volumique standard MVS est mesurée selon la norme ASTM D 792. La mesure de la MVS est effectuée sur un échantillon préparé selon la norme ASTM D 1928 Procédure C. La MVS du copolymère selon l'invention est de préférence au moins égale à (952,75 + 5,40 x log HLMI - 0,70 x Q). Particulièrement préférés sont des copolymères présentant une MVS au moins égale à (952,75 + 5,40 x log HLMI - 0,63 x Q).

Les copolymères selon l'invention présentent habituellement une MVS supérieure à 935 kg/m$^3$. Des copolymères ayant donnés de bons résultats sont ceux dont la MVS est au moins égale à 940 kg/m$^3$, plus particulièrement ceux dont la MVS est au moins égale à 945 kg/m$^3$. Le plus souvent la MVS des copolymères selon l'invention ne dépasse pas 965 kg/m$^3$, de préférence elle ne dépasse pas 962 kg/m$^3$. Particulièrement préférés sont les copolymères dont la MVS ne dépasse pas 959 kg/m$^3$.

Les copolymères selon l'invention présentent généralement un indice de fluidité HLMI, mesuré à 190 °C sous une charge de 21,6 kg selon la norme ASTM D 1238 Condition F (1986), qui ne dépasse pas 100 g/10 min, le plus souvent pas 50 g/10 min. Le HLMI est généralement d'au moins 0,1 g/10 min, en particulier d'au moins 0,5 g/10 min.

Une autre caractéristique essentielle des copolymères selon l'invention est leur distribution des masses moléculaires relativement large, caractérisée par un rapport entre les viscosités dynamiques $\mu_0$ et $\mu_2$ mesurées à 190 °C, respectivement à des gradients de vitesse de 1 et 100 s$^{-1}$, $\mu_0$ / $\mu_2$ supérieur ou égal à (23,67 - 6,67 x log HLMI). Dans le cadre de la présente invention, la viscosité dynamique $\mu_2$ est déterminée par extrusion du polymère à 190 °C, au travers d'une filière d'une longueur de 15 mm et d'un diamètre de 1 mm, à une vitesse constante correspondant à un gradient de vitesse de 100 s$^{-1}$, et en mesurant la force transmise par le piston pendant sa descente. La viscosité dynamique $\mu_2$ est alors calculée par la relation $\mu_2$ = 233 x Fp , dans laquelle Fp représente la force moyenne excercée par le piston pendant la durée de mesure de 30 secondes exprimée en daN. Le cylindre et le piston du rhéomètre utilisé pour cette mesure répondent aux critères de celui utilisé pour la mesure de l'indice de fluidité selon la norme ASTM D 1238 (1986). Dans le cadre de la présente invention, la viscosité dynamique $\mu_0$ est déterminée par l'extrapolation, à un gradient de vitesse de 1 s$^{-1}$, des mesures des viscosités dynamiques effectuées à des gradients de vitesses de 7 à 3000 s$^{-1}$ selon la méthode décrite ci-dessus pour $\mu_2$.

Les copolymères selon l'invention présentent généralement un rapport $\mu_0$ / $\mu_2$ au moins égal à 10, plus particulièrement au moins égal à 12. Le rapport $\mu_0$ / $\mu_2$ ne dépasse habituellement pas 50.

Par ailleurs, les copolymères d'éthylène selon l'invention ont un taux de gonflement, $T_G$, qui est le plus souvent d'au moins 1,3 et de préférence d'au moins 1,45. Particulièrement préférés sont les copolymères qui présentent un $T_G$ d'au moins 1,55 Dans le cadre de la présente invention, le taux de gonflement est déterminé par extrusion du polymère à 190 °C et à un gradient de vitesse de 100 s$^{-1}$, au travers d'une filière d'une longueur de 15 mm et d'un diamètre de 1 mm, à une vitesse constante et en mesurant le déplacement du piston nécessaire pour extruder un jonc de 70 mm. Le taux de gonflement est alors calculé par la relation $T_G$ = 0,5707 $\sqrt{e}$ , dans laquelle e représente le déplacement du piston exprimé en mm. Le cylindre et le piston du rhéomètre utilisé pour cette mesure répondent aux critères de celui utilisé pour la mesure de l'indice de fluidité selon la norme ASTM D 1238 (1986).

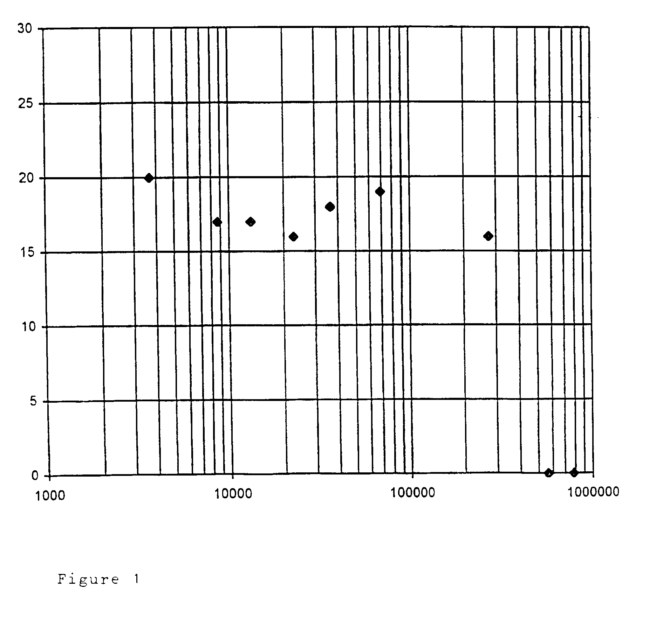

Les copolymères selon l'invention se caractérisent généralement par une incorporation homogène de l'alpha-oléfine dans les chaînes de masse moléculaire différente. L'homogénéité de l'incorporation de l'alpha-oléfine peut être caractérisée par le fractionnement du copolymère et par la détermination de la teneur en alpha-oléfine pour chaque fraction de masse moléculaire différente. Le graphique à la figure 1 reprend, en ordonnée, la teneur en alpha-oléfine pour, en abscisse, des fractions de masses moléculaires différentes présentes dans un copolymère selon l'invention. Les copolymères selon l'invention comprennent généralement des fractions de masses moléculaires variant de 5000 à 500000 comprenant chacune une teneur en alpha-oléfine, exprimée en g/kg, de 0,75 x Q à 1,25 x Q, Q étant la teneur en alpha-oléfine du copolymère.

Les copolymères selon l'invention se caractérisent habituellement par une incorporation importante de l'alpha-oléfine dans les chaînes de masse moléculaire élevée. Les copolymères selon l'invention comprennent généralement des fractions de masses moléculaires variant de 100000 à 500000 comprenant chacune une teneur en alpha-oléfine supérieure à 0,8 x Q, plus particulièrement supérieure à 0,9 x Q.

Les copolymères selon la présente invention comprennent généralement moins de 10 ppm de chlore. Le plus souvent, ils comprennent moins de 5 ppm de chlore.

La présente invention concerne également un procédé convenant particulièrement bien à la préparation des copolymères d'éthylène et d'au moins une alpha-oléfine décrits ci-devant. Ce procédé consiste à polymériser, en une seule étape, l'éthylène et au moins une alpha-oléfine telle que définie ci-devant en présence d'un solide catalytique à base d'oxyde de chrome déposé sur un support homogène et amorphe, contenant au moins deux constituants choisi parmi la silice (X), l'alumine (Y) et le phosphate d'aluminium (Z) et d'un cocatalyseur choisi parmi les composés organoboriques.

Le solide catalytique à base d'oxyde de chrome déposé sur un support homogène et amorphe, contenant au moins deux constituants choisi parmi la silice (X), l'alumine (Y) et le phosphate d'aluminium (Z) est connu et a été décrit dans les demandes de brevet WO 94/26790, WO 94/26791 et EP-A-0 712 868, dont le contenu est incorporé par référence. Il est généralement obtenu par imprégnation ou par mélange du support avec un composé du chrome, suivi d'une activation à une température de 400 à 1000 °C en atmosphère oxydante de façon à transformer une partie au moins du chrome en chrome hexavalent.

La quantité de chrome présente dans le solide catalytique est généralement de 0,05 à 10 % en poids, de préférence de 0,1 à 5 % en poids, plus particulièrement de 0,25 à 2 % en poids par rapport au poids total du solide catalytique.

Le support présente avantageusement une surface spécifique (SS), mesurée selon la méthode volumétrique BET (norme britannique BS 4359/1 - 1984), d'au moins 100 m$^2$/g, en particulier d'au moins 180 m$^2$/g, les valeurs d'au moins 220 m$^2$/g étant les plus favorables. La SS est le plus souvent d'au plus 800 m$^2$/g, plus précisément d'au plus 700 m$^2$/g, les valeurs d'au plus 650 m$^2$/g étant les plus courantes.

Le support présente en général une température de cristallisation d'au moins 700 °C, telle que par exemple d'au moins 1000 °C. La température de cristallisation du support est déterminée en soumettant un échantillon du support à un traitement thermique à différentes températures et en examinant, après chaque traitement thermique, l'échantillon par diffraction des rayons X.

En outre, le volume poreux du support (VP) est habituellement d'au moins 1,5 cm$^3$/g, les valeurs d'au moins 1,7 m$^3$/g étant recommandées. Le VP est généralement d'au plus 5 cm$^3$/g, en particulier d'au plus 4,5 cm$^3$/g, les valeurs d'au plus 4 cm$^3$/g étant courantes. Le volume poreux (VP) est la somme du volume poreux constitué par les pores de rayon inférieur ou égal à 75 Å , mesuré par la méthode de pénétration à l'azote (BET) (norme britannique BS 4359/1-1984), et du volume poreux mesuré par la méthode de pénétration au mercure au moyen du porosimètre de type PORO 2000 commercialisé par CARLO ERBA CO (norme belge NBN B 05-202 - 1976).

Les supports utilisés présentent habituellement une SS et un VP, exprimés respectivement en m$^2$/g en cm$^3$/g, tels que SS < (VP x 564 - 358). Des supports préférés présentent une SS et un VP tels que SS < (VP x 682 - 542). Particulièrement préférés sont des supports qui présentent une SS et un VP tels que SS ≤ (VP x 682 - 573).

Le support tel que décrit ci-dessus peut avantageusement être obtenu selon le procédé décrit dans les demandes de brevet WO 94/26790 et EP-A-0 712 868, qui consiste à mélanger, dans une première étape, un alcool, de l'eau, un alcoolate de silicium et un acide dans des quantités telles que le rapport molaire eau/silicium soit de 2 à 50, à ajouter au milieu d'hydrolyse ainsi obtenu, dans une deuxième étape, une solution acide d'un composé d'aluminium et/ou une solution d'une source d'ions phosphates, et, dans une troisième étape, un agent de précipitation pour obtenir un précipité qui est lavé, dans une quatrième étape, à l'eau puis avec un liquide organique, et séché, dans une cinquième étape, par distillation jusqu'à l'obtention d'une poudre qui est calcinée. Un autre procédé de préparation du support homogène et amorphe consiste à mélanger, dans une première étape, une source de silice choisie parmi les sols aqueux alcalins de silice et les solutions aqueuses alcalines de silicate inorganique à une source d'ions phosphates de pH inférieur à 5, le pH du milieu étant maintenu inférieur à 5 pendant toute la durée de la première étape, à ajouter, dans une deuxième étape, un composé d'aluminium au milieu issu de la première étape, et à former, dans une troisième étape, un précipité par ajout au milieu de la deuxième étape d'un agent de précipitation, le pH du milieu de précipitation étant maintenu supérieur ou égal à 5 pendant toute la durée de la troisième étape, et à sécher le précipité jusqu'à l'obtention d'une poudre, puis à calciner la poudre.

Le solide catalytique ayant donné de bons résultats dans le procédé selon l'invention comprend de 0,05 à 10 % en poids de chrome et le support contient la silice (X), l'alumine (Y) et le phosphate d'aluminium (Z) en un pourcentage molaire (X):(Y):(Z) de (10 à 95):(1 à 80):(1 à 85), et plus particulièrement en un pourcentage molaire (X):(Y):(Z) de (20 à 80):(0,5 à 60):(5 à 60).

Le procédé de polymérisation selon l'invention est effectuée en présence d'un cocatalyseur choisi parmi les composés organoboriqucs. Des composés organoboriques qui conviennent particulièrement bien sont les trialkylbores et plus particulièrement ceux dont les chaînes alkyles comprennent de 1 à 12 atomes de carbone, de préférence de 2 à 6 atomes de carbone. Le triéthylbore donne de bons résultats.

La quantité de cocatalyseur mise en oeuvre est en général de 0,02 à 50 mmoles par litre de solvant, de diluant ou de volume de réacteur.

Les quantités de solide catalytique et de cocatalyseur mises en oeuvre dans le procédé selon l'invention sont le plus souvent telles que le rapport molaire entre le composé organoborique et le chrome présent dans le solide catalytique est d'au moins 0,1 et plus particulièrement d'au moins 0,8. Ce rapport est en outre favorablement d'au plus 20 et plus particulièrement d'au plus 10.

Le procédé de polymérisation selon l'invention peut être effectué selon tout procédé en une étape connu. Il est de préférence effectué en suspension dans un diluant hydrocarboné, aromatique, cycloaliphatique ou aliphatique à une température telle qu'au moins 80 % en poids du copolymère formé est insoluble dans ce diluant. Le diluant utilisé est de préférence un alcane linéaire, tel que le n-butane, le n-hexane ou le n-heptane, ou un alcane branché, tel que l'isobutane, l'isopentane ou le 2,2-diméthylpropane. Le diluant est de préférence l'isobutane.

La température de polymérisation est généralement au moins 55 °C, de préférence au moins 65 °C. La température de polymérisation ne dépasse généralement pas 150 °C, de préférence pas 110 °C.

La pression d'éthylène dans le réacteur de polymérisation est généralement choisie entre la pression atmosphérique et 5 MPa. La pression d'éthylène est de préférence au moins égale à 0,3 MPa, plus particulièrement au moins égale à 0,4 MPa. La pression d'éthylène ne dépasse le plus souvent pas 2 MPa, plus particulièrement pas 1,5 MPa. Dans le cas particulier où la polymérisation est réalisée en suspension dans un diluant, la pression de l'éthylène est généralement réglée de façon à ce que la concentration de l'éthylène dans ce diluant est d'au moins 1 % molaire, de préférence d'au moins 3 % molaire. La pression de l'éthylène est généralement réglée de façon à ce que la concentration de l'éthylène dans le diluant ne dépasse pas 20 % molaire, de préférence pas 10 % molaire.

La quantité d'alpha-oléfine mise en oeuvre dans le procédé de polymérisation selon l'invention dépend de la quantité d'alpha-oléfine désirée dans le copolymère. Il a été observé que dans le procédé de polymérisation selon l'invention, même sans ajout d'alpha-oléfines dans le milieu de polymérisation, des copolymères de l'éthylène contenant une faible quantité d'unités dérivés d'alpha-oléfines ont été retrouvées. Cet effet pourrait être expliqué par la production in situ de faibles quantités d'alpha-oléfines contenant au moins 4 atomes de carbone, qui seraient incorporés dans la chaîne de polymérisation en croissance. Le procédé selon l'invention peut dès lors être effectué sans ajout d'alpha-oléfines au réacteur de polymérisation. Toutefois, et plus particulièrement dans le cas où des copolymères plus riches en alpha-oléfines sont désirés, des alpha-oléfines telles que définies ci-devant sont ajoutées au réacteur de polymérisation. Dans ce cas, la quantité d'alpha-oléfines mise en oeuvre est généralement réglée de façon à ce que le rapport molaire alpha-oléfine/éthylène est d'au moins 0,005. De manière préférée, la quantité d'alpha-oléfine est réglée de façon à ce que ce rapport est d'au moins 0,01, plus particulièrement d'au moins 0,03. La quantité d'alpha-oléfine est habituellement réglée de façon à ce que le rapport molaire alpha-oléfine/éthylène ne dépasse pas 0,8. De manière préférée, ce rapport ne dépasse pas 0,5, plus particulièrement pas 0,4.

Le procédé de polymérisation selon l'invention peut être effectué en présence d'un agent de transfert tel que par exemple de l'hydrogène.

Le procédé selon l'invention permet d'obtenir une activité catalytique élevée, il permet en outre d'obtenir des copolymères ayant une faible teneur en oligomères.

Le procédé selon l'invention a l'avantage de présenter une période d'induction très faible, voire nulle.

Les copolymères selon l'invention conviennent bien pour le façonnage en fondu d'articles très divers. A cet effet, les copolymères sont généralement mélangés avec les additifs de mise en oeuvre usuels des polyoléfines, tels que des stabilisants (des agents antioxydants et/ou anti-UV), des agents antistatiques et des agents de mise en oeuvre ("processing aid") ainsi que des pigments.

L'invention concerne dès lors également une composition comprenant un copolymère selon l'invention et au moins un des additifs décrits ci-dessus. La teneur en additifs de la composition est en général inférieure à 10 et le plus souvent inférieure à 5 parties pour 100 parties en poids de copolymère.

Particulièrement préférées sont les compositions comprenant au moins 95 %, de préférence au moins 99 %, en poids d'un copolymère

Les exemples qui suivent sont destinés à illustrer l'invention.

La signification des symboles utilisés dans ces exemples et les unités exprimant les grandeurs mentionnées et les méthodes de mesures de ces grandeurs sont explicitées ci-dessous.

α =        activité catalytique exprimée en g de copolymère obtenu par heure et par g de catalyseur mis en oeuvre et divisé par la concentration de l'éthylène dans l'isobutane.

FO =        teneur en oligomères du polymère, exprimée en g d'oligomères par kg de copolymère et mesurée par extraction à l'hexane à sa température d'ébullition.

Q =        teneur en hexène du copolymère, mesurée comme décrit ci-dessus, la teneur en unités dérivées du 1-hexène étant calculée à partir des mesures des intégrales des raies caractéristiques des unités dérivées du 1-hexène (23,4, 34,9 et 38,1 ppm) par rapport à l'intégrale de la raie caractéristique des unités dérivées de l'éthylène (30 ppm).

ESCR-A = la résistance à la fissuration lente est mesurée selon la norme ASTM D 1693 et exprimée en heure.

Les autres propriétés HLMI, MVS, $\mu_0 / \mu_2$ et $T_G$ ont été explicitées dans la description.

Exemple 1 (conforme à l'invention)

Dans cet exemple, un solide catalytique comprenant 0,7 % en poids de chrome sur un support comprenant 50,4 % molaire de $SiO_2$, 1,8 % molaire de $Al_2O_3$ et 47,8 % molaire de $AlPO_4$ et présentant une surface spécifique de 293 m²/g et un volume poreux de 3,17 cm³/g a été mis en oeuvre. L'obtention d'un tel support a été décrite dans les exemples 1, 4 et 5 de la demande de brevet EP-A-0 712 868. Le solide catalytique a été préparé en mélangeant le support avec de l'acétylacétonate de chrome, puis en traitant le mélange dans un lit fluidisé à 150 °C pendant 2 heures sous balayage d'air et en le calcinant ensuite dans le lit fluidisé à 595 °C pendant 10 h sous air sec.
La polymérisation a été effectuée dans de l'isobutane en présence de ce solide catalytique et une quantité de triéthylbore (TEB) de façon à obtenir le rapport molaire TEB/Cr renseigné dans le tableau I. La température a été élevée et de l'éthylène a été introduit dans le réacteur de façon à obtenir une concentration dans l'isobutane renseignée dans le tableau I. Une quantité de 1-hexène a été introduite de façon à obtenir un rapport molaire 1-hexène/éthylène renseigné dans le tableau I. Ce rapport molaire éthylène/hexène a été maintenu constant au cours de toute la durée de polymérisation. Après la polymérisation, le copolymère a été récupéré.
Les conditions de polymérisation, les résultats obtenus ainsi que les propriétés du copolymère sont rassemblés dans le tableau I.
Le copolymère obtenu à l'exemple 1 a été fractionné et les teneurs en hexène de différentes fractions ayant des masses moléculaires différentes ont été mesurées. Le graphique à la figure 1 reprend les teneurs en hexène, exprimées en g/kg (en ordonnée) des différentes fractions (en abscisse). On y voit que les fractions de masses moléculaires variant de 5000 à 500000 comprennent chacune une teneur en hexène de 16 à 20 g/kg et que les fractions de masses moléculaires variant de 100000 à 500000 comprennent une teneur en hexène d'environ 16 g/kg.

Exemple 2 (conforme à l'invention)

Dans cet exemple, la polymérisation a été effectuée dans l'isobutane avec un solide catalytique comprenant 0,7 % en poids de chrome sur un support comprenant 52,3 % molaire de $SiO_2$, 2,2 % molaire de $Al_2O_3$ et 45,5 % molaire de $AlPO_4$ et présentant une surface spécifique de 297 m²/g et un volume poreux de 2,2 cm³/g. Le solide catalytique a été préparé en mélangeant le support avec de l'acétylacétonate de chrome, puis en traitant le mélange dans un lit fluidisé à 150 °C pendant 2 heures sous balayage d'air et en le calcinant ensuite dans le lit fluidisé à 595 °C pendant 10 h sous air sec.
Les conditions de polymérisation, les résultats obtenus ainsi que les propriétés du copolymère sont rassemblés dans le tableau I.

Exemples 3 et 4 (conformes à l'invention)

Dans ces exemples, la polymérisation a été effectuée dans l'isobutane avec le solide catalytique décrit dans l'exemple 1, sauf qu'il a été calciné à 700 °C pendant 16 h sous air sec.
Les conditions de polymérisation, les résultats obtenus ainsi que les propriétés du copolymère sont rassemblés dans le tableau I.

Exemple 5R (non conforme à l'invention)

Cet exemple a été réalisé au moyen du solide catalytique décrit à l'exemple 1 mais en l'absence de triéthylbore. Les propriétés du copolymère obtenu sont rassemblées dans le tableau I. On y voit que le copolymère obtenu présente, pour une teneur en alpha-oléfine de 11 g/kg, une MVS plus faible que le copolymère de l'exemple 1 qui comprend plus de copolymère.

Exemples 6R et 7R (non conformes à l'invention)

Ces exemples ont été réalisés au moyen d'un catalyseur au Cr classique comprenant 1 % de chrome sur un support de silice (cogel 963 vendu par la société GRACE) à la place du solide catalytique de l'exemple 1. Les propriétés du copolymère obtenu sont rassemblées dans le tableau 1. On y voit que le copolymère obtenu dans l'exemple 6R présente, pour une MVS comparable, une teneur en alpha-oléfine nettement inférieure à celle des copolymères des exemples 1 et 4, ainsi qu'une distribution des masses moléculaire (rapport $\mu_0 / \mu_2$) moins large.

Le tableau I montre également que le copolymère obtenu dans l'exemple 7R présente, pour une MVS comparable, une teneur en alpha-oléfine nettement inférieure à celle du copolymère de l'exemple 2, et présente dès lors une résistance à la fissuration lente moins bonne.

Tableau I

| Exemple | 1 | 2 | 3 | 4 | 5R | 6R | 7R |
|---|---|---|---|---|---|---|---|
| TEB/Cr (mol/mol) | 1 | 0,89 | 2 | 2 | 0 | 0 | 0 |
| éthylène/isobutane (% molaire) | 7 | 8 | 9 | 9 | 7 | 7 | 10 |
| T de polymérisation (°C) | 82 | 94 | 80 | 70 | 97 | 94 | 92 |
| hexène/éthylène (mol/mol) | 0,263 | 0,041 | 0,10 | 0,30 | 0,051 | 0,04 | 0,011 |
| $\alpha$ (g/g cata/h) | 6660 | 8000 | 2840 | 2560 | 6500 | 3000 | 3800 |
| FO (g/kg) | 34 | 20 | 28 | 30 | 15 | 11 | - |
| Q (g/kg) | 16 | 8 | 7 | 14 | 11 | 5 | 1 |
| HLMI (g/10min) | 26,3 | 5,7 | 21 | 18,1 | 11,2 | 10,8 | 3,6 |
| MVS (kg/m$^3$) | 949,7 | 954,4 | 956,6 | 950,7 | 948,5 | 951,2 | 954 |
| $\mu_0 / \mu_2$ | - | - | 16 | 17,4 | - | 10,04 | - |
| $T_G$ | - | - | 2,2 | 2,3 | - | 1,65 | - |
| ESCR-A (h) | - | > 500 | - | - | - | - | 450 |

**Revendications**

1. Copolymère de l'éthylène et d'au moins une alpha-oléfine obtenu au moyen d'un solide catalytique à base d'oxyde de chrome, ledit copolymère possédant un indice de fluidité HLMI exprimé en g/10 min, une quantité d'alpha-oléfine Q exprimée en g d'alpha-oléfine par kg de copolymère, une masse volumique standard MVS exprimée en $kg/m^3$ et des viscosités dynamiques $\mu_0$ et $\mu_2$ mesurées à 190 °C, respectivement à des gradients de vitesse de 1 et 100 $s^{-1}$, répondant aux relations

$$MVS \geq (952{,}75 + 5{,}40 \times \log HLMI - 0{,}79 \times Q),$$

et

$$\mu_0 / \mu_2 \geq (23{,}67 - 6{,}67 \times \log HLMI).$$

2. Copolymère selon la revendication 1, caractérisé en ce que sa MVS est au moins égale à $(952{,}75 + 5{,}40 \times \log HLMI - 0{,}70 \times Q)$.

3. Copolymère selon la revendication 1 ou 2, caractérisé en ce que l'alpha-oléfine comprend de 3 à 12 atomes de carbone.

4. Copolymère selon la revendication 3, caractérisé en ce que l'alpha-oléfine est le 1-butène et/ou le 1-hexène.

5. Copolymère selon l'une quelconque des revendications 1 à 4, caractérisé en ce que la quantité d'alpha-oléfine Q est au moins égale à 1 g/kg et ne dépasse pas 100 g/kg de copolymère.

6. Copolymère selon l'une quelconque des revendications 1 à 5, caractérisé en ce que la MVS est supérieure à 935 $kg/m^3$ et ne dépasse pas 965 $kg/m^3$.

7. Copolymère selon l'une quelconque des revendications 1 à 6, caractérisé en ce que le HLMI est au moins égale à 0,1 g/10 min et ne dépasse pas 100 g/10 min.

8. Copolymère selon l'une quelconque des revendications 1 à 7, caractérisé en ce que le rapport $\mu_0 / \mu_2$ est au moins égal à 10 et ne dépasse pas 50.

9. Copolymère selon l'une quelconque des revendications 1 à 8, caractérisé en ce qu'il présente un taux de gonflement $T_G$ d'au moins 1,3.

10. Procédé de préparation du copolymère d'éthylène conforme à l'une quelconque des revendications 1 à 9, selon lequel on polymérise en une seule étape, éventuellement en présence d'hydrogène, de l'éthylène et au moins une alpha-oléfine en présence d'un solide catalytique à base d'oxyde de chrome déposé sur un support homogène et amorphe, ledit support contenant au moins deux constituants choisi parmi la silice, l'alumine et le phosphate d'aluminium et d'un cocatalyseur choisi parmi les composés organoboriques.

11. Procédé selon la revendication 10, caractérisé en ce que le solide catalytique comprend de 0,05 à 10 % en poids de chrome et le support contient la silice (X), l'alumine (Y) et le phosphate d'aluminium (Z) en un pourcentage molaire (X):(Y):(Z) de (10 à 95):(1 à 80):(1 à 85).

12. Procédé selon la revendication 10 ou 11, caractérisé en ce que le composé organoborique est un trialkylbore dont les chaînes alkyles comprennent de 1 à 12 atomes de carbone.

13. Procédé selon la revendication 12, caractérisé en ce que le trialkylbore est du triéthylbore.

14. Composition comprenant au moins un additif et au moins 95 % en poids d'un copolymère conforme à l'une quelconque des revendications 1 à 9.

15. Utilisation d'une composition selon la revendication 14 pour le façonnage en fondu d'articles.

**Patentansprüche**

1. Copolymer von Ethylen und wenigstens einem alpha-Olefin, das mittels eines katalytischen Feststoffs auf der Basis von Chromoxid erhalten wird, wobei besagtes Copolymer einen Schmelzindex HLMI, ausgedrückt in g/10 min, eine Menge an alpha-Olefin Q, ausgedrückt in g alpha-Olefin pro kg Copolymer, eine Standarddichte MVS, ausgedrückt in $kg/m^3$, und dynamische Viskositäten $\mu_0$ und $\mu_2$, gemessen bei 190 °C mit Geschwindigkeitsgradienten von 1 beziehungsweise 100 $s^{-1}$, besitzt, die den Beziehungen

$$MVS \geq (952{,}75 + 5{,}40 \times \log HLMI - 0{,}79 \times Q)$$

und

$$\mu_0 / \mu_2 \geq (23{,}67 - 6{,}67 \times \log HLMI)$$

gehorchen.

2. Copolymer gemäß Anspruch 1, dadurch gekennzeichnet, dass seine MVS wenigstens gleich $(952{,}75 + 5{,}40 \times \log HLMI - 0{,}70 \times Q)$ ist.

3. Copolymer gemäß Anspruch 1 oder 2, dadurch gekennzeichnet, dass das alpha-Olefin 3 bis 12 Kohlenstoffatome umfasst.

4. Copolymer gemäß Anspruch 3, dadurch gekennzeichnet, dass das alpha-Olefin 1-Buten und/oder 1-Hexen ist.

5. Copolymer gemäß einem der Ansprüche 1 bis 4, dadurch gekennzeichnet, dass die Menge an alpha-Olefin Q wenigstens gleich 1 g/kg Copolymer ist und 100 g/kg Copolymer nicht übersteigt.

6. Copolymer gemäß einem der Ansprüche 1 bis 5, dadurch gekennzeichnet, dass die MVS höher als 935 $kg/m^3$ ist und 965 $kg/m^3$ nicht übersteigt.

7. Copolymer gemäß einem der Ansprüche 1 bis 6, dadurch gekennzeichnet, dass der HLMI wenigstens gleich 0,1 g/10 min ist und 100 g/10 min nicht übersteigt.

8. Copolymer gemäß einem der Ansprüche 1 bis 7, dadurch gekennzeichnet, dass das Verhältnis $\mu_0 / \mu_2$ wenigstens gleich 10 ist und 50 nicht übersteigt.

9. Copolymer gemäß einem der Ansprüche 1 bis 8, dadurch gekennzeichnet, dass es eine Schwellrate TG von wenigstens 1,3 aufweist.

10. Verfahren zur Herstellung des Ethylen-Copolymers gemäß einem der Ansprüche 1 bis 9, gemäß dem man in einem einzigen Schritt, gegebenenfalls in Gegenwart von Wasserstoff, Ethylen und wenigstens ein alpha-Olefin in Gegenwart eines katalytischen Feststoffs auf der Basis von Chromoxid, abgeschieden auf einem homogenen und amorphen Träger, wobei besagter Träger wenigstens zwei Bestandteile enthält, die unter Siliciumdioxid, Aluminiumoxid und Aluminiumphosphat ausgewählt sind, und eines Cokatalysators, der unter den Organoborverbindungen ausgewählt ist, polymerisiert.

11. Verfahren gemäß Anspruch 10, dadurch gekennzeichnet, dass der katalytische Feststoff 0,05 bis 10 Gew.-% Chrom umfasst und der Träger Siliciumdioxid (X), Aluminiumoxid (Y) und Aluminiumphosphat (Z) in einem Molprozentsatz (X): (Y): (Z) von (10 bis 95): (1 bis 80): (1 bis 85) enthält.

12. Verfahren gemäß Anspruch 10 oder 11, dadurch gekennzeichnet, dass die Organoborverbindung ein Trialkylbor ist, dessen Alkylketten 1 bis 12 Kohlenstoffatome umfassen.

13. Verfahren gemäß Anspruch 12, dadurch gekennzeichnet, dass das Trialkylbor Triethylbor ist.

14. Zusammensetzung, die wenigstens einen Zusatzstoff und wenigstens 95 Gew.-% eines Copolymers gemäß einem der Ansprüche 1 bis 9 umfasst.

15. Verwendung einer Zusammensetzung gemäß Anspruch 14 für das Formen von Gegenständen in der Schmelze.

## Claims

1. Copolymer of ethylene and of at least one alpha-olefin obtained by means of a catalytic solid based on chromium oxide, the said copolymer having a melt flow index HLMI, expressed in g/10 min, an amount of alpha-olefin Q, expressed in g of alpha-olefin per kg of copolymer, a standard density SD, expressed in $kg/m^3$, and dynamic viscosities $\mu_0$ and $\mu_2$ measured at 190°C, respectively at rate gradients of 1 and 100 $s^{-1}$, corresponding to the relationships

$$SD \geq (952.75 + 5.40 \times log\ HLMI - 0.79\ x\ Q),$$

and

$$\mu_0/\mu_2 \geq (23.67 - 6.67 \times log\ HLMI)\ .$$

2. Copolymer according to Claim 1, characterized in that its SD is at least equal to (952.75 + 5.40 $\times$ log HLMI - 0.70 $\times$ Q).

3. Copolymer according to Claim 1 or 2, characterized in that the alpha-olefin comprises from 3 to 12 carbon atoms.

4. Copolymer according to Claim 3, characterized in that the alpha-olefin is 1-butene and/or 1-hexene.

5. Copolymer according to any one of Claims 1 to 4, characterized in that the amount of alpha-olefin Q is at least equal to 1 g/kg and does not exceed 100 g/kg of copolymer.

6. Copolymer according to any one of Claims 1 to 5, characterized in that the SD is greater than 935 $kg/m^3$ and does not exceed 965 $kg/m^3$.

7. Copolymer according to any one of Claims 1 to 6, characterized in that the HLMI is at least equal to 0.1 g/10 min and does not exceed 100 g/10 min.

8. Copolymer according to any one of Claims 1 to 7, characterized in that the ratio $\mu_0/\mu_2$ is at least equal to 10 and does not exceed 50.

9. Copolymer according to any one of Claims 1 to 8, characterized in that it exhibits a die swell (DS) of at least 1.3.

10. Process for the preparation of the ethylene copolymer in accordance with any one of Claims 1 to 9, according to which ethylene and at least one alpha-olefin are polymerized in a single stage, optionally in the presence of hydrogen, in the presence of a catalytic solid based on chromium oxide deposited on a homogeneous and amorphous support, the said support comprising at least two constituents chosen from silica, alumina and aluminium phosphate, and of a cocatalyst chosen from organoboron compounds.

11. Process according to Claim 10, characterized in that the catalytic solid comprises from 0.05 to 10% by weight of chromium and the support comprises silica (X), alumina (Y) and aluminium phosphate (Z) in an (X):(Y):(Z) molar percentage of (10 to 95):(1 to 80):(1 to 85).

12. Process according to Claim 10 or 11, characterized in that the organoboron compound is a trialkylborane in which the alkyl chains comprise from 1 to 12 carbon atoms.

13. Process according to Claim 12, characterized in that the trialkylborane is triethylborane.

14. Composition comprising at least one additive and at least 95% by weight of a copolymer in accordance with any one of Claims 1 to 9.

15. Use of a composition according to Claim 14 for the melt shaping of articles.

Figure 1